# EUROPÄISCHE PATENTSCHRIFT

(11) **EP 0 604 371 B1**
(45) Veröffentlichungstag und Bekanntmachung des Hinweises auf die Patenterteilung: **03.06.1998**
(21) Anmeldenummer: 93810883.4
(22) Anmeldetag: 15.12.1993
(51) Int. Cl.: C09D 4/00, C09D 4/06

(54) **Polymerisierbare Masse, Verfahren zum Herstellen der polymerisierbaren Masse und Verfahren zur Herstellung einer beschlagsfreien oder beschlagsarmen Schicht aus der polymerisierbaren Masse**
Polymerizable composition, process for producing a polymerizable composition, and process for producing a non-fogging or low-fogging coating from this polymerizable composition
Composition polymérisable, procédé de préparation d'une composition polymérisable et procédé de préparation d'une couche anti-buée ou à depôt de buée réduit à partir de cette composition polymérisable

(30) Priorität: 23.12.1992 CH 3917/92
(43) Veröffentlichungstag der Anmeldung: 29.06.1994
(73) Patentinhaber: Gurit-Worbla AG, CH-3063 Ittigen (CH)
(72) Erfinder: Keller, Martin, Dr., CH-6462 Gersau (CH); Lenhard, Martin, CH-3063 Ittigen (CH)
(74) Vertreter: Hepp, Dieter

(56) Entgegenhaltungen:
- EP-A- 0 156 493
- EP-A- 0 157 396
- EP-A- 0 399 441
- GB-A- 2 018 622
- US-A- 4 557 980
- DATABASE WPI Week 8541, Derwent Publications Ltd., London, GB; AN 85-252521 & JP-A-60 166 251 (ARON KASEI)
- DATABASE WPI Week 9218, Derwent Publications Ltd., London, GB; AN 92-147981 & JP-A-4 091 068 (NIPPON KASEI)

## Beschreibung

Die Erfindung betrifft eine polymerisierbare Masse, ein Verfahren zum Herstellen einer polymerisierbaren Masse, die Verwendung einer polymerisierbaren Acrylsäure, sowie ein Verfahren zur Herstellung einer beschlagsfreien oder beschlagsarmen Schicht gemäss Oberbegriff der unabhängigen Patentansprüche.

Polymerisierbare Massen oder Lösungen zur Herstellung einer beschlagsfreien oder beschlagsarmen Schicht sind in den verschiedensten Ausführungsformen bekannt. Anwendungsgebiete sind vor allem Brillen, Gasmasken, Gläser, Spiegel oder andere optische Gläser. In der Praxis lassen sich solche Schichten z.B. aus Zellulose-Ester, aus Seife oder auch einfach aus Cellophan-Folie erzeugen. Ein Nachteil der bekannten Beschichtungen ist vor allem ungenügende Wasseraufnahme, optische Qualität, Kratzfestigkeit und damit Beschlagsfreiheit.

Vor allem auf Kunststoffen mit harter/unpolarer Oberfläche, wie z.B. Polycarbonaten, die sich für den optischen Einsatz besonders gut eignen, ist die Aufbringung derartiger beschlagsfreier Schichten äusserst wünschenswert, da die genannten harten Kunststoffe praktisch keine Wasseraufnahme und somit keine Beschlagsfreiheit in feuchter Atmosphäre aufweisen.

Aus der JP 60166251A ist eine wasserzurückhaltende Beschichtung für Pflanzen bekannt. Die Zusammensetzung besteht aus einer polymerisierbaren Acrylsäure, einem Acrylat oder einem Acrylsäure-Amidmonomer.

Der Erfindung liegt die Aufgabe zugrunde, die eingangs genannten Massen und Verfahren derart zu verbessern, dass auch auf Trägermaterial mit problematischer Haftung, wie z.B. auf Polycarbonat, polymerisierbare Schichten aufgebracht werden können, die sich durch hohe Beschlagsfreiheit und gute Oberflächeneigenschaften auszeichnen.

Erfindungsgemäss wird diese Aufgabe in erster Linie gemäss Kennzeichen der Patentansprüche gelöst.

Durch die Verwendung einer polymerisierbaren Acrylsäure und eines polymerisierbaren unvernetzten oder teilvernetzten oligomeren Acrylats, dem 1 bis 10 % G (2) eines Salzes, insbesondere eines Alkalisalzes, speziell eines Salzes der Acrylsäure (bezogen auf die Acrylsäure, Oligomer und Salz) beigemengt sind, lässt sich auf einfache Weise eine beschlagsfreie Schicht mit guten Eigenschaften herstellen. Die bekannten Polymerisationsaktivatoren können eingesetzt werden. Dazu zählen z.B. Irgacure®, Quantacure®, Darocur®, Benzophenone etc. Die Polymerisation selbst lässt sich in bekannter Weise durch Licht verschiedener Frequenzen (UV-Strahlung, Bereich ABC) auslösen. Auch Elektronenstrahlung als Polymerisationsauslöser ist gebräuchlich. Die Masse kann ausser dem Haftverbesserer oder Füllstoffe aufweisen.

Durch Beigabe eines Aktivators können in bekannter Weise die Polymerisationsdauer und die die Polymerisation auslösenden Wellenlängen der UV-Strahlung bestimmt werden. Eine derart hergestellte Schicht zeichnet sich durch gute Wasseraufnahmefähigkeit und hohe Kratzfestigkeit aus. Die Schichtdicke bestimmt die Menge der Wasseraufnahme.

Besonders wirksam lässt sich die Erfindung auch realisieren, wenn ein oligomeres Acrylat, insbesondere also ein Polyurethanacrylat oder ein Polyesteracrylat, in Acrylsäure wasserfrei verdünnt wird und sodann ein Alkalisalz der Acrylsäure, insbesondere ein Natriumsalz oder ein Lithiumsalz, beigegeben wird. Statt Lithium oder Natrium eignen sich auch andere Salze wie z.B. Kalium- und CS-Salze. Selbstverständlich sind weitere Metallsalze der Acrylsäure einsetzbar.

Besonders vorteilhaft ist das oligomere Acrylat ein aromatisches oder aliphatisches PUR-Acrylat oder ein PE-Acrylat. Als Salz der Acrylsäure wird vorteilhaft ein Natriumsalz verwendet. Die Menge des Acrylats beträgt vorteilhaft 10 bis 60 Gew% bezogen auf die Acrylsäure und der Anteil des Salzes 1 bis 10 Gew%.

Der Gewichtsanteil des Natriumsalzes der Acrylsäure bezogen auf Acrylsäure, Oligomer und Salz kann weiter vorteilhaft 0,3 bis 10 Gew.%, insbesondere etwa 3,8 Gew.% betragen.

Alternativ kann auch ein Lithium-Salz der Acrylsäure eingesetzt werden. Der Gewichtsanteil beträgt in diesem Fall vorteilhaft 0,5 bis 60 Gew.%, insbesondere etwa 4,3 Gew.% bezogen auf Acrylsäure, Oligomer und Salz.

Das Lithium-Salz wird am besten unmittelbar vor der Beimengung, z.B. aus Acrylsäure und Lithiummethylat hergestellt. Der Mengenanteil des oligomeren Acrylates kann dabei 5 % bis 70 % betragen (bezogen auf das Gesamtgewicht).

Zweckmässig wird das Salz vor der Beimengung hergestellt. Dies kann z.B. aus Natriummethylat (30 % in Methanol) und Acrylsäure hergestellt werden. Die Mengenanteile des oligomeren Acrylats können dabei 10 bis 60 % betragen (bezogen auf Gesamtgewicht).

Wenn Salz direkt durch Zumischen von Natriummethylat in Methanol gebildet wird, kann das Lösungsmittel während oder nach dem Beimischen oder auch vor/bei der Anwendung abgedampft werden. Bei der Verwendung von Natriummethylat in einer Mischung von z.B. 30 % in Methanol ist deshalb das Methanol nach dem Beimischen und/oder Rühren abzudampfen.

Der Mischung können dann noch die üblichen Zuschlagstoffe (UV-Katalysatoren) wie z.B. Irgacure® oder 500 der Firma Ciba Geigy beigegeben werden.

Besonders bewährt hat sich als Acrylat ein aliphatisches Urethanacrylat.

Besonders haftfähige Schichten mit guter Wasseraufnahmefähigkeit und besonders kratzfester Oberfläche ergeben sich, wenn die polymerisierbare Masse unter Luftabschluss auf den zu beschichtenden Körper aufgetragen und ausgehärtet wird. Auf diese Weise lässt sich vor allem erreichen, dass keine Schutzstoffe, die den Polymerisationsabbruch durch 02-Einfluss verhindern, der Mischung beigegeben werden müssen.

Die Verwendung der oligomeren Acrylate gewährleistet vor allem, dass die aufgetragene Schicht zuverlässig wasserunlöslich ist und dass sie für weite Einsatzbereiche ausserordentlich kratzfest und nicht spröde ist.

In bestimmten Anwendungsfällen ist es auch möglich, die teilversalzene Acrylsäure in einem ersten Arbeitsschritt aufzutragen, die Bildung der ersten Schicht durch Polymerisation abzuschliessen und sodann eine zweite Schicht aus Mannit-Diacrylat aufzutragen. In der Praxis ist der Auftrag einer einzigen Schicht meist aus ökonomischen Gründen vorzuziehen.

Die nachfolgenden Ausführungsbeispiele dienen der Erläuterung der Erfindung.

### Beispiel 1:

### Herstellung der Beschichtungsmasse:

In 48 g Acrylsäure werden 2,0 g Lithiummethylat sorgfältig gelöst (Schutz- und Vorsichtsmassnahmen wie üblich). Darin werden nun 1,5 g Irgacure® 184 oder ein adäquater UV-Katalysator gelöst. Dazu werden 48 g eines Urethanacrylat-Oligomeren gemischt (z.B. Ebecryl® 270 von Radcure®).

Gegen Quarz auf Polycarbonat mit UV gehärtet, ergibt diese Mischung eine beschlagsfreie Schicht mit einer BfZ von mehr als 10 Sek. pro Mikron Schichtdicke.

### Beispiel 2:

### Herstellung einer Masse mit Urethanacrylat:

100 g eines aliphatischen Urethanacrylat-Oligomeren (Ebecryl® 270 von Radcure®) werden in 200 ml Acrylsäure gelöst. 20 g Natriummethylat werden darin langsam und sorgfältig eingemischt. Im ganzen werden 3,2 g Irgacure® 184, oder ein anderer UV-Katalysator gelöst. Die Menge ist von Produkt zu Produkt anzupassen.

Gegen Quarz auf Polycarbonat mit UV gehärtet, ergibt eine beschlagsfreie Schicht, mit einer BfZ von ca. 10 Sekunden pro Mikron Schichtdicke.

### Beispiel 3:

### Herstellung einer Masse mit PE-Acrylat:

100 g eines Polyester Acrylates (Ebercryl 505 von Radcure) werden auf dieselbe Art zubereitet wie in Beispiel 2 angegeben.

Analog gehärtet ergibt die Beschichtung eine BfZ von ca. 5 Sekunden pro Mikron Schichtdicke.

### Beispiel 4:

Die nach vorstehenden Rezepturen hergestellten Massen werden auf eine Polycarbonat-Folie (Lexan® 8040 von GE), Grösse DIN A4, Dicke 0,5 cm aufgetragen. Die Polycarbonatfolie wird derart auf eine Quarzplatte gepresst, dass sich eine Schichtdicke der polymerisierbaren Masse von ca. 20 µm ergibt. Sodann wird durch die Quarzplatte mit einer UV-Lampe während 30 Sek. belichtet. Nach dem Entfernen der Quarzplatte ergeben sich für die verschiedenen Rezepturen folgende Werte:

### Versuch 1

| Beispiel : | 1 | 2 | 3 |
|---|---|---|---|
| Kratzfestigkeit: (Sandrieseltest nach DIN 4646 Δ Haze) | <1 % | 7 % | 10 % |
| Gitterschnitthaftung: | 10 | 10 | 8 |
| Reisstest: | 8 | 10 | 5 |
| Beschlagsfreizeit: | >10 | 10 | 5 |
| (Sek./µm Schichtdicke DIN 4646.8) | | | |

Selbstverständlich kann die Aushärtung auch unter Schutzgas erfolgen. Stattdessen sind auch Substanzen zum Schutz der Polymerisation von Sauerstoff einsetzbar, wie auf diesem Gebiet üblich.

Für die Mengenherstellung empfiehlt sich der Einsatz einer Beschichtungsmaschine, über welche die zu beschichtenden Folien geführt werden und wobei zwischen Folie und Förderband oder -rolle die polymerisierbare Masse unter Luftabschluss eingebracht werden kann. Die Belichtung der Masse kann sowohl durch die zu beschichtende Folie als auch, z.B. im Fall von Quarztrommeln, durch die Trommel erfolgen.

## Patentansprüche

1. Polymerisierbare Masse zur Herstellung einer beschlagsfreien oder beschlagsarmen Schicht auf einem Trägermaterial, insbesondere einer Kunststoff-Folie, enthaltend ein unvernetztes oder teilvernetztes oligomeres Acrylat, Acrylsäure sowie 1 bis 10 % G eines Salzes, insbesondere eines Salzes der Acrylsäure, bezogen auf Acrylsäure, Oligomer und Salz, sowie gegebenenfalls weitere Zuschlagstoffe, wie Haftverbesserer, Polymerisations-Aktivatoren oder Füllstoffe.

2. Polymerisierbare Masse nach Anspruch 1, enthaltend Acrylsäure und wenigstens ein oligomeres Acrylat, insbesondere ein aromatisches oder aliphatisches PUR-Acrylat oder ein PE-Acrylat mit einem Gewichtsanteil von 10 bis 60 % G bezogen auf die Acrylsäure sowie 1 bis 10 % G eines Salzes, insbesondere eines Natriumsalzes der Acrylsäure.

3. Polymerisierbare Masse nach Anspruch 2, enthaltend ein aliphatisches Urethanacrylat.

4. Polymerisierbare Masse nach einem der vorangehenden Ansprüche 1 oder 2, enthaltend 0,3 bis 10% G, insbesondere etwa 3,8 % eines Natriumsalzes der Acrylsäure, bezogen auf Acrylsäure, Oligomer und Salz.

5. Polymerisierbare Masse nach einem der vorangehenden Ansprüche 1 bis 4, enthaltend 0,5 % G bis 60 % G, insbesondere etwa 4,3 % G eines Lithiumsalzes der Acrylsäure, bezogen auf Acrylsäure, Oligomer und Salz.

6. Verwendung eines unvernetzten oder teilvernetzten oligomeren Acrylats, Acrylsäure sowie 1 bis 10 % eines Salze, insbesondere eines Salzes der Acrylsäure enthält und das gegebenenfalls weitere Zuschlagstoffe, wie Haftverbesserer, Polymerisationsaktivatoren oder Füllstoffe enthält, als Beschichtungsmasse zur Herstellung beschlagsfreier oder beschlagsarmer Oberflächen.

7. Verwendung nach Anspruch 6, dadurch gekennzeichnet, dass das Salz ein Lithiumsalz der Acrylsäure ist.

8. Verwendung nach Anspruch 6, dadurch gekennzeichnet, dass das Salz ein Natriumsalz der Acrylsäure ist.

9. Verfahren zur Herstellung einer beschlagsfreien oder beschlagsarmen Schicht auf einem Trägermaterial mit einer polymerisierbaren Masse nach einem der Ansprüche 1 bis 5, dadurch gekennzeichnet, dass die Masse unter Luftabschluss auf dem Trägermaterial ausgehärtet wird.

10. Trägermaterial, insbesondere Kunststoff-Folie für optische Zwecke, mit einer beschlagsfreien oder beschlagsarmen Schicht, welche Schicht ein unvernetztes oder teilvernetztes oligomeres Acrylat, Acrylsäure, sowie 1 bis 10 % G eines Salzes, insbesondere eines Salzes der Acrylsäure, bezogen auf Acrylsäure, Oligomer und Salz, sowie gegebenenfalls weitere Zuschlagstoffe, wie Haftverbesserer, Polymerisations-Aktivatoren oder Füllstoffe enthält.

## Claims

1. A polymerisable material for the production of a misting-free or low-misting layer on a carrier material, in particular a plastics film, containing non-cross-linked or partially cross-linked oligomeric acrylate, acrylic acid and from 1 to 10% by weight of a salt, in particular a salt of acrylic acid, with respect to acrylic acid, oligomer and salt, and possibly further additives such as adhesion improvers, polymerisation activators or fillers.

2. A polymerisable material according to claim 1 containing acrylic acid and at least one oligomeric acrylate, in particular an aromatic or aliphatic PUR-acrylate or a PE-acrylate with a proportion by weight of from 10 to 60% with respect to the acrylic acid and from 1 to 10% by weight of a salt, in particular a sodium salt of acrylic acid.

3. A polymerisable material according to claim 2 containing an aliphatic urethane acrylate.

4. A polymerisable material according to one of preceding claims 1 and 2 containing from 0.3 to 10% by weight and in particular about 3.8% of a sodium salt of acrylic acid, with respect to acrylic acid, oligomer and salt.

5. A polymerisable material according to one of preceding claims 1 to 4 containing from 0.5% by weight to 60% by weight and in particular about 4.3% by weight of a lithium salt of acrylic acid, with respect to acrylic acid, oligomer and salt.

6. Use of a non-cross-linked or partially cross-linked oligomeric acrylate, acrylic acid and from 1 to 10% of a salt, in particular a salt of acrylic acid, and possibly containing further additives such as adhesion improvers, polymerisation activators or fillers, as a coating material for producing misting-free or low-misting surfaces.

7. Use according to claim 6 characterised in that the salt is a lithium salt of acrylic acid.

8. Use according to claim 6 characterised in that the salt, is a sodium salt of acrylic acid.

9. A process for the production of a misting-free or low-misting layer on a carrier material with a polymerisable material according to one of claims 1 to 5 characterised in that the polymerisable material is hardened with the exclusion of air on the carrier material.

10. A carrier material, in particular a plastics film for optical purposes, having a misting-free or low-misting layer, which layer contains a non-cross-linked or partially cross-linked oligomeric acrylate, acrylic acid, and from 1 to 10% by weight of a salt, in particular a salt of acrylic acid, with respect to acrylic acid, oligomer and salt, and possibly further additives such as adhesion improvers, polymerisation activators or fillers.

## Revendications

1. Composition polymérisable pour préparer une couche anti-buée ou à faible dépôt de buée sur un matériau support, en particulier une feuille en matière plastique, contenant un acrylate oligomère non réticulé ou partiellement réticulé, de l'acide acrylique, ainsi que de 1 à 10 % en poids d'un sel, en particulier un sel de l'acide acrylique par rapport à l'acide acrylique, à l'oligomère et au sel, et aussi, éventuellement, d'autres additifs tels que des promoteurs d'adhérence, des activateurs de polymérisation ou des matières de charge.

2. Composition polymérisable selon la revendication 1, contenant de l'acide acrylique et au moins un acrylate oligomère, en particulier un acrylate de PUR aromatique ou aliphatique, ou un acrylate de PE, avec une proportion pondérale de 10 à 60 % en poids par rapport à l'acide acrylique, et 1 à 10 % en poids d'un sel, en particulier un sel de sodium de l'acide acrylique.

3. Composition polymérisable selon la revendication 2, contenant un acrylate d'uréthanne aliphatique.

4. Composition polymérisable selon l'une des revendications 1 et 2 ci-dessus, contenant de 0,3 à 10 % en poids, en particulier environ 3,8 % d'un sel de sodium de l'acide acrylique, par rapport à l'acide acrylique, à l'oligomère et au sel.

5. Composition polymérisable selon l'une des revendications 1 à 4 ci-dessus, contenant de 0,5 à 60 % en poids, et en particulier environ 4,3 % en poids d'un sel de lithium de l'acide acrylique, par rapport à l'acide acrylique, à l'oligomère et au sel.

6. Utilisation d'un acrylate oligomère non réticulé ou partiellement réticulé, d'acide acrylique et de 1 à 10 % d'un sel, en particulier d'un sel de l'acide acrylique, et qui contiennent éventuellement d'autres additifs tels que des promoteurs d'adhérence, des activateurs de polymérisation ou des matières de charge, en tant que composition de revêtement pour préparer des surfaces anti-buée ou à faible dépôt de buée.

7. Utilisation selon la revendication 6, caractérisée en ce que le sel est un sel de lithium de l'acide acrylique.

8. Utilisation selon la revendication 6, caractérisée en ce que le sel est un sel de sodium de l'acide acrylique.

9. Procédé pour préparer une couche anti-buée ou à faible dépôt de buée sur un matériau support avec une composition polymérisable selon l'une des revendications 1 à 5, caractérisé en ce que la composition est durcie sur le matériau support à l'abri de l'air.

10. Matériau support, en particulier feuille en matière plastique pour applications optiques, avec une couche anti-buée ou à faible dépôt de buée, laquelle couche contient un acrylate oligomère non réticulé ou partiellement réticulé, de l'acide acrylique, ainsi que de 1 à 10 % en poids d'un sel, en particulier un sel de l'acide acrylique, par rapport à l'acide acrylique, à l'oligomère et au sel, et éventuellement aussi d'autres additifs tels que des promoteurs d'adhérence, des activateurs de polymérisation ou des matières de charge.
